# EUROPEAN PATENT APPLICATION

(11) **EP 2 233 722 A2**
(43) Date of publication of application: **29.09.2010**
(21) Application number: 10156638.8
(22) Date of filing: 16.03.2010
(51) Int. Cl.: F02C 6/18, F02C 7/10

(54) **Split flow regenerative power cycle**

(30) Priority: 25.03.2009 US 411326
(71) Applicant: General Electric Company, Schenectady, NY 12345 (US)
(72) Inventor: Smith, Raub Warfield, Ballston Lake, NY 12019 (US)
(74) Representative: Gray, Thomas

(57) **Abstract**

Split flow regenerative power cycle systems (100, 200, 300, 800, 1000) are provided. The systems (100, 200, 300, 800, 1000) can include a gas turbine (180, 280, 380, 880, 1080) configured to generate a split flow exhaust stream (110, 210, 310, 810, 1010) having a first exhaust stream (311, 811, 1011) and a second exhaust stream (312, 812, 1012), a regenerator (135, 235, 335, 835 1035) operatively coupled to the gas turbine (180, 280, 380, 880, 1080) and configured to receive the first exhaust stream (311, 811, 1011), and a heat recovery steam generator (250, 350, 850, 1050) operatively coupled to the gas turbine (180, 280, 380, 880, 1080) and configured to receive a second exhaust stream (312, 812, 1012). The systems (100, 200, 300, 800, 1000) can include generating a gas turbine exhaust stream from a gas turbine (180, 280, 380, 880, 1080), splitting the exhaust stream to a first exhaust stream (311, 811, 1011) and a second exhaust stream (312, 812, 1012), directing the first exhaust stream (311, 811, 1011) from the gas turbine (180, 280, 380, 880, 1080) to a first regenerative power cycle and directing the second exhaust stream (312, 812, 1012) from the gas turbine (180, 280, 380, 880, 1080) to a second heat recovery power cycle.

## Description

### BACKGROUND OF THE INVENTION

The subject matter disclosed herein relates to regenerative gas turbine cycles and more particularly to split flow regenerative power cycle systems.

Regenerative gas turbine cycles are conventionally implemented to gas turbines and micro-turbines to improve Brayton cycle efficiency beyond what is otherwise achievable with a simple cycle machine. In current regenerative gas turbine cycles, partial replacement of fuel energy is achieved by regeneratively transferring energy from exhaust to the combustion air after it leaves the turbine compressor and before entering the turbine combustor. The compression ratio in such a machine is low enough that the exhaust temperature leaving the turbine and entering the regenerator is higher than the compressor discharge air to be heated therein. Substantial efficiency improvement to the gas turbine cycle is realized. The cycle can be further improved by addition of a heat recovery (bottoming) cycle to utilize the exhaust energy still remaining after regenerative heating of the combustion supply air. Conventionally, the addition of the bottoming cycle results in a modest improvement over a conventional combined cycle wherein the gas turbine is not regenerative since the regenerator leaves much cooler exhaust for the bottoming cycle. What is needed is improvement of bottoming cycle performance in the context of a regenerative gas turbine topping cycle.

### BRIEF DESCRIPTION OF THE INVENTION

According to one aspect of the invention, a regenerative power cycle system for a gas turbine combined cycle is provided. The method can include generating a gas turbine exhaust stream from a gas turbine, splitting the exhaust stream to a first exhaust stream and a second exhaust stream, directing the first exhaust stream from the gas turbine to a first regenerative power cycle and directing the second exhaust stream from the gas turbine to a second heat recovery power cycle.

According to another aspect of the invention, a regenerative power cycle system is provided. The system can include a gas turbine configured to generate a split flow exhaust stream having a first exhaust stream and a second exhaust stream, a regenerator operatively coupled to the gas turbine and configured to receive the first exhaust stream, and a heat recovery steam generator configured to receive the second exhaust stream from the gas turbine.

According to yet another aspect of the invention, a gas turbine system is provided. The system can include a gas turbine having two parallel exhaust streams, a regenerator operatively configured to receive a first stream of the parallel exhaust streams, a heat recovery steam generator operatively configured to receive a second stream of the parallel exhaust streams and a combustor configured to receive a heated compressed air stream from the regenerator.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a regenerative gas turbine system in which exemplary embodiments can be implemented;
FIG. 2 illustrates a regenerative gas turbine combined cycle system in which exemplary embodiments can be implemented;
FIG. 3 illustrates an exemplary split flow regenerative power cycle gas turbine system;
FIG. 4 illustrates a chart of the second law efficiency behavior of a state of the art steam bottoming cycle as a function of available heat source temperature;
FIG. 5 illustrates a chart of Net Plant efficiency versus compressor pressure ratio for exemplary systems and conventional systems;
FIGS. 6-9 illustrate a table showing a comparison of power cycles;
FIG. 10 illustrates a flow chart of a split flow regenerative power cycle method in accordance with exemplary embodiments;
FIG. 11 illustrates a regenerative gas turbine combined cycle system in which exemplary embodiments can be implemented;
FIG. 12 illustrates a flow chart of a split flow regenerative power cycle method in accordance with the exemplary system of FIG. 11.
FIG. 13 illustrates a regenerative gas turbine combined cycle system in which exemplary embodiments can be implemented; and
FIG. 14 illustrates a flow chart of a split flow regenerative power cycle method in accordance with the exemplary system of FIG. 13.
The detailed description explains embodiments of the invention, together with advantages and features, by way of example with reference to the drawings.

### DETAILED DESCRIPTION OF THE INVENTION

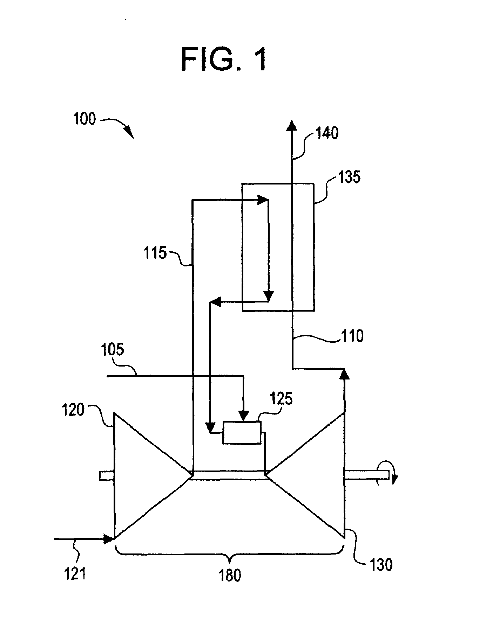

FIG. 1 illustrates a regenerative gas turbine system 100 in which exemplary embodiments can be implemented. As described herein, in regenerative gas turbine cycles, partial replacement of fuel stream 105 is achieved by transferring energy recovered from an exhaust stream 110 to combustion air 115 after input air 121 leaves the turbine compressor 120 of a gas turbine 180 and before entering the turbine combustor 125 for the turbine expander 130 of the gas turbine 180. The remaining exhaust energy 140 is exhausted from the regenerator.

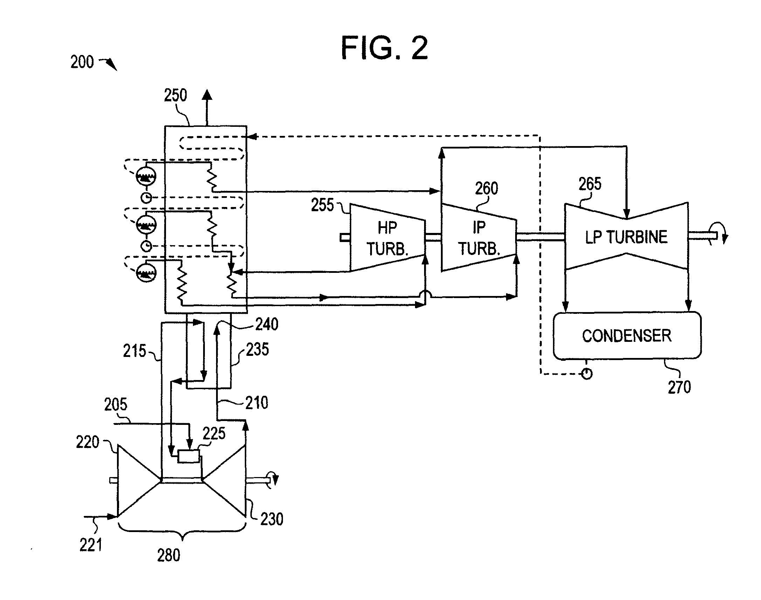

FIG. 2 illustrates a regenerative gas turbine combined cycle system 200 in which exemplary embodiments can be implemented. In exemplary embodiments, partial replacement of fuel stream 205 is achieved by transferring energy recovered from an exhaust stream 210 to combustion air 215 after input air 221 leaves a turbine compressor 220 of a gas turbine 280 and before entered the turbine combustors 225 for the turbine expander 230 of the gas turbine 280. Currently, the heat recovery (steam bottoming) cycle begins heat recovery with the exhaust stream 240 leaving the gas turbine regenerator 235 into a heat recovery steam generator (HRSG) 250. The recovered exhaust energy can be implemented to produce steam in the HRSG 250 to power a series of steam turbines 255, 260, 265 for example. For illustrative purposes the steam turbines can include a high pressure turbine 255, an intermediate pressure turbine 260, and a low pressure turbine 265. The system 200 can further include a condenser 270 to condense the exhaust steam to water for re-use in the HRSG 250. It is appreciated that many additional configurations can be implemented for re-use of the exhaust stream 240.

Referring still to FIG. 2, since the exhaust stream 210 has been cooled as it transfers heat to the combustion air 215, the exhaust stream 240 is substantially cooler than the exhaust from the turbine expander 230 of a conventional gas turbine combined cycle without a regenerator. This cooler heat source is difficult to recover to power as efficiently as the hotter exhaust 210 available when there is no regenerator 135.

The exemplary embodiments described herein provide improvements to the heat recovery configurations in any combined cycle wherein pressurized topping cycle working fluid is heated regeneratively (directly or indirectly) with available exhaust energy, as well as a bottoming cycle that further recovers and utilizes any remaining topping cycle engine exhaust energy (not recovered to heat the topping cycle's pressurized working fluid). A regenerative Brayton cycle (gas turbine) is discussed herein for illustrative purposes. The gas turbine may include reheat combustion, air moisturization, steam cooling, intercooling, or any other variation on the Brayton cycle theme, including other working fluids and a closed cycle. However, it is appreciated that heat engines employing thermal cycles other than Brayton are also contemplated in other exemplary embodiments. For further illustrative purposes, the heat recovery bottoming cycle employs water/steam as the working fluid in a Rankine cycle, though any other fluid or thermal cycle suitable for heat recovery is contemplated in other exemplary embodiments. Exemplary systems and apparatuses described herein implement parallel high temperature exhaust from the gas turbine expansion to heat combustion air as well as the bottoming cycle working fluid. In exemplary embodiments, cycle efficiency is increased with respect to conventional systems and apparatuses.

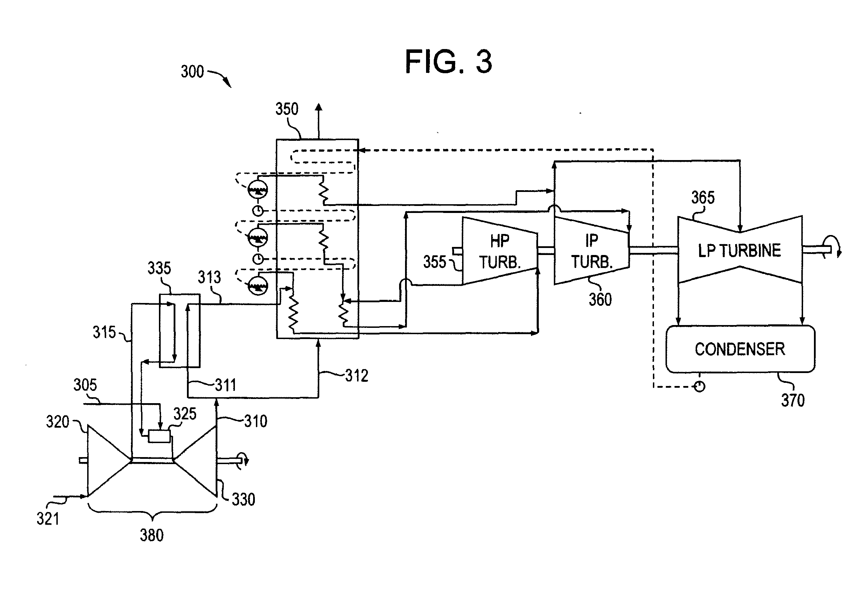

FIG. 3 illustrates an exemplary split flow regenerative power cycle gas turbine system 300. The system 300 can include a turbine compressor configured to receive an air stream 321 for compression to a compressed air stream 315. The system 300 can further include a turbine expander 330 operatively coupled to the turbine compressor 320. The gas turbine 380 includes an exhaust stream 310. In exemplary embodiments, the exhaust stream 310 is split in parallel into a regenerator exhaust stream 311 (first exhaust stream) and an (HRSG) exhaust stream 312 (second exhaust stream). The system 300 can further include a turbine combustor 325 operatively coupled to the turbine expander 330 and configured to receive a fuel stream 305 and the compressed air stream 315. The system 300 can further include a regenerator 335 configured to receive the exhaust stream 311 from the turbine expander 330. In exemplary embodiments, the regenerator 335 utilizes energy in the exhaust stream 311 to add heat to the compressed air stream 315 for introduction to the turbine combustor 325. The system 300 can further include a HRSG 350 configured to receive the exhaust stream 312 from the turbine expander 330 to generate steam for a steam turbine. In exemplary embodiments, an improved steam bottoming cycle is realized because the exhaust stream to the HRSG 350 is received directly from the turbine expander 330 at full temperature. By receiving the exhaust stream 312 into the HRSG 350 directly from the gas turbine 380, no temperature drop is experienced as is the case if an exhaust stream is received after leaving the regenerator (such as stream 240 in FIG. 2). However, the parallel regenerator exhaust stream 311 is still applied to heat the compressed air stream 315 in the regenerator 335. In addition, an output stream 313 (third exhaust stream)from the regenerator 335 can still be input into the HRSG 350 to supply additional heat to generate steam in the HRSG 350. It is appreciated that by splitting the exhaust stream 310 into two parallel exhaust streams 311, 312, the bottoming cycle receives higher temperature energy from the gas turbine topping cycle. This higher temperature exhaust energy from the exhaust stream 310 in contrast to an exhaust stream received directly from a regenerator enables increased efficiency in the heat recovery bottoming cycle since the bottoming cycle working fluid peak temperature can be higher. As described herein, the recovered exhaust streams 312, 313 can be implemented to produce steam in the HRSG 350 to power a series of steam turbines 355, 360, 365 (for example) that are operatively coupled to the HRSG 350. For illustrative purposes the steam turbines can include a high pressure turbine 355, an intermediate pressure turbine 360, and a low pressure turbine 365. The system 300 can further include a condenser 370 to condense the exhaust steam to water for re-use in the HRSG 350. It is appreciated that many additional configurations can be implemented for heat recovery from the exhaust streams 312, 313.

In exemplary embodiments, the systems and apparatuses described herein provide efficient heat recovery from the exhaust of a regenerative gas turbine to both the combustion air and the bottoming cycle. In exemplary embodiments, efficiency increase results from reduced regenerator exergy destruction (i.e., the loss of available energy due in this case to transfer of heat from one stream to another across a finite temperature difference), and by increased bottoming cycle working fluid temperature. Regarding reduced regenerator exergy destruction, by apportioning a high temperature exhaust flow (e.g., the exhaust stream 311 from the turbine expander 330) entering the regenerator 335 to be closely equivalent to the combustion air flow the exergy destruction due to heat transfer difference in the regenerator is decreased. In this manner, the temperature drop of the exhaust gas passing through the regenerator can be made substantially equal to the temperature rise of the compressor discharge air being heated in counter-flow such that the irreversibility due to heat transfer is decreased for a given heat exchanger duty. Furthermore, since the two streams transfer heat with essentially fixed temperature difference, the only constraint on reducing the irreversibility to zero is the cost of the heat exchanger. This reduction in regenerator losses translates directly to higher exergy availability to the bottoming cycle.

Regarding the increased bottoming cycle working fluid temperature, the remainder of the high temperature exhaust energy from the turbine expansion (e.g., stream 312 entering the HRSG 350), closely equivalent to the proportion of the compressor inlet air that is devoted to hot gas path cooling, is made available to the bottoming cycle to allow increased steam temperature to be attained, even though the bulk of the exhaust energy remaining after combustion air heating in the regenerator is substantially cooler than the exhaust exiting from the gas turbine expansion 310. This is a direct benefit from the increased exhaust exergy made available to the bottoming cycle, (due as noted above to reduced regenerator exergy losses), as well as a direct turbine expansion enhancement due to reduced steam exhaust moisture and its associated steam turbine efficiency benefit.

In exemplary embodiments, although the exhaust flow after turbine expansion 310 is higher than the airflow entering the combustor 315 (due to the need for cooling air extraction from the compressor to cool the turbine hot parts), the overall cycle performance can still benefit in cases with no cooling air extraction by reserving a portion of the high temperature exhaust stream to heat bottoming cycle working fluid to high temperature. As such, with an uncooled engine with regeneration, the regenerator can be allotted less exhaust flow than the combustion air being heated, with the difference being made available to the heat recovery bottoming cycle for heating its working fluid to peak temperature. Even in the case of a cooled engine, the exhaust flow split between the regenerator and the bottoming cycle high temperature heat recovery may provide less flow for regeneration than would be necessary to decrease regenerator exergy destruction.

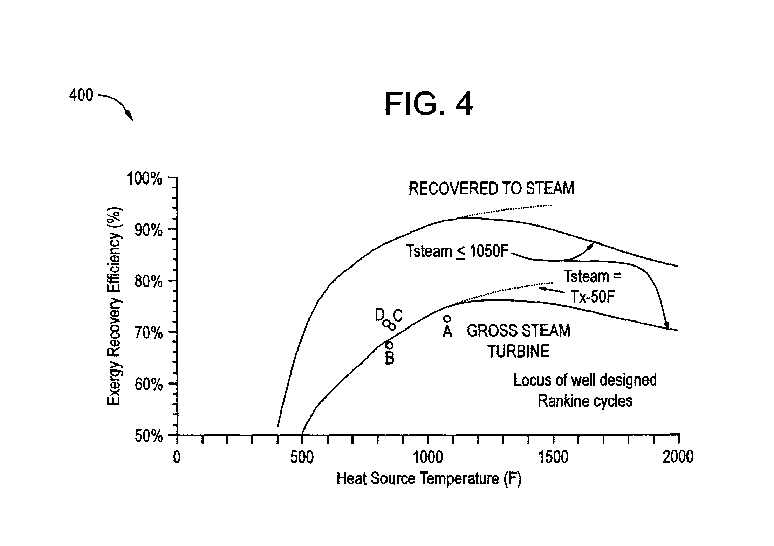

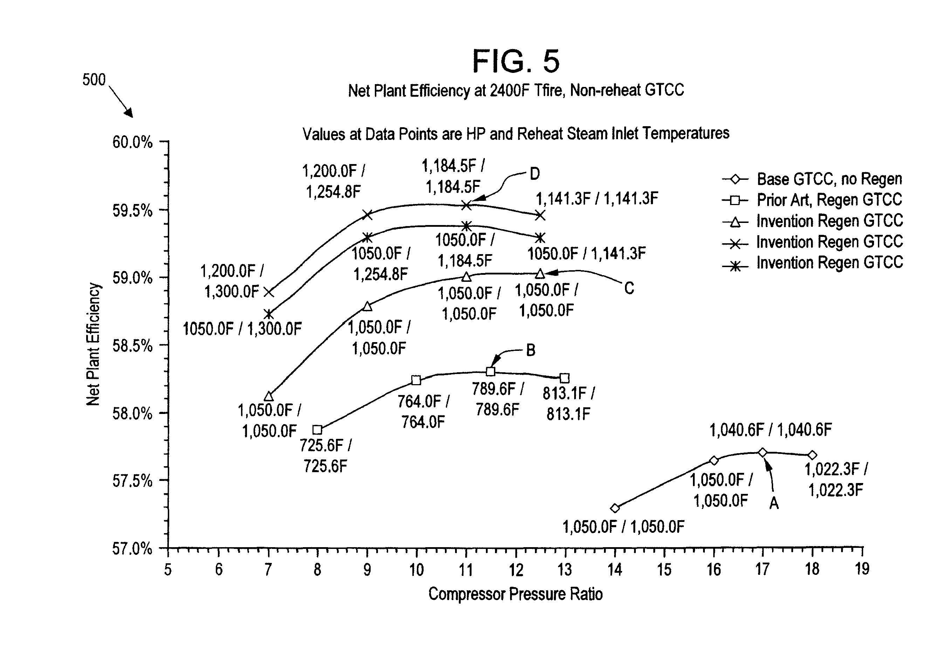

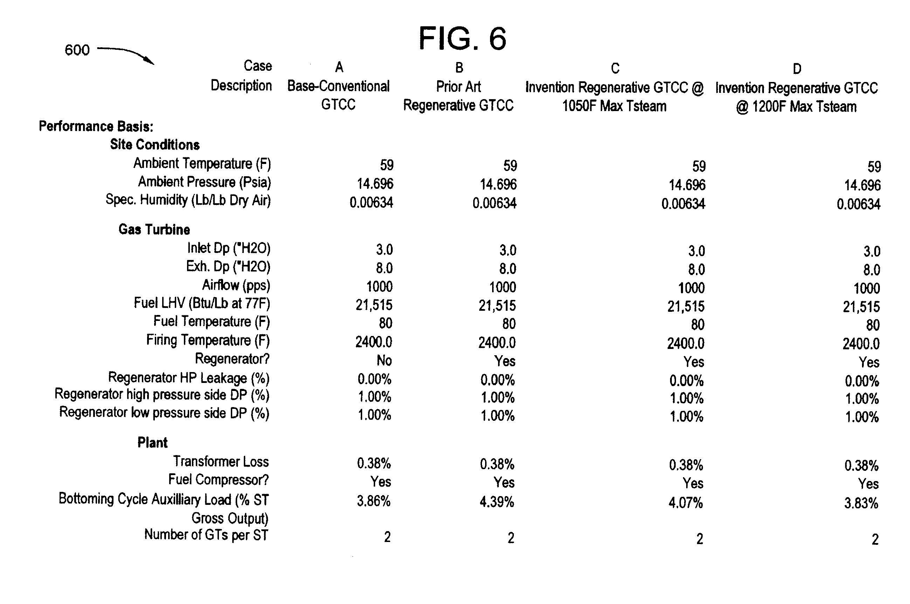

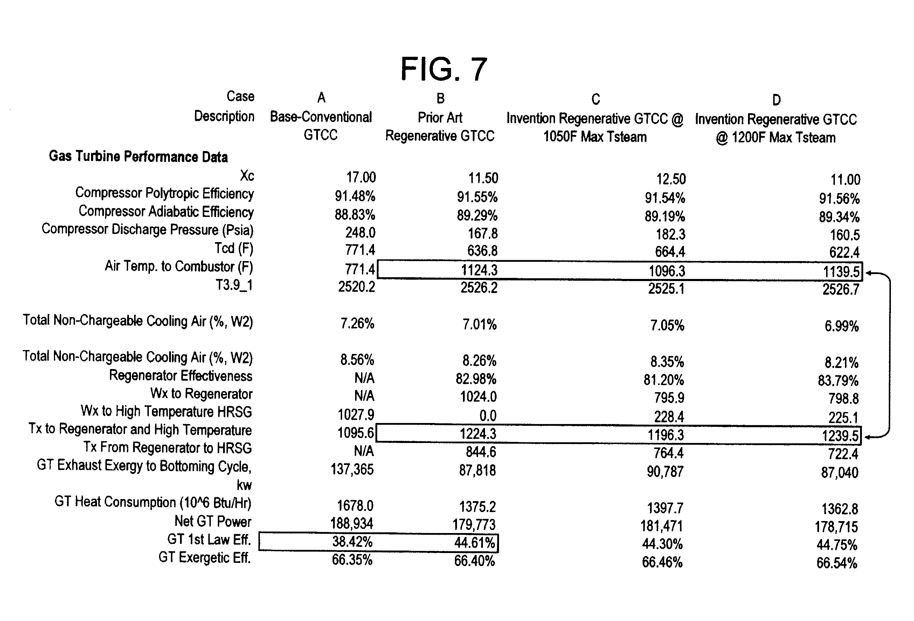

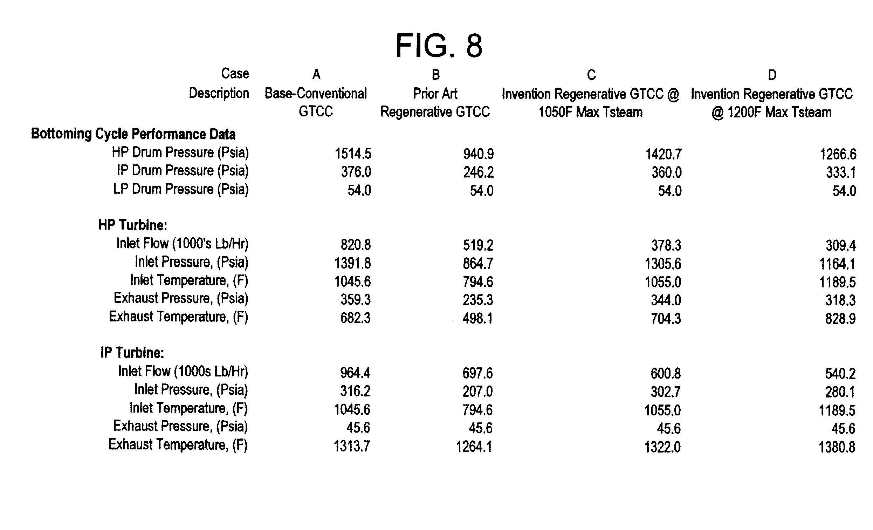

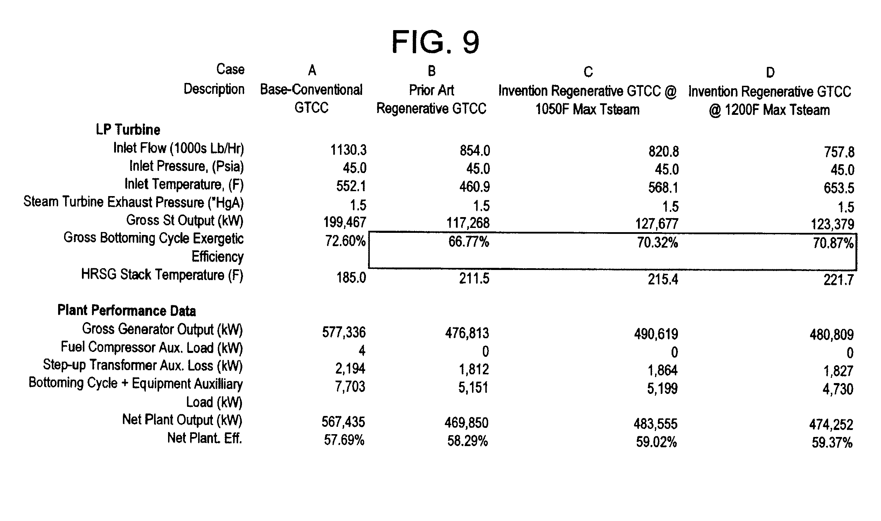

FIG. 4 illustrates a chart 400 of the second law efficiency behavior of a state of the art steam bottoming cycle as a function of available heat source temperature. FIG. 5 illustrates a chart 500 of Net Plant efficiency versus compressor pressure ratio for exemplary systems and conventional systems. Table 1 compares the performance of four comparable gas turbine combined cycles employing the same engine technology (e.g., compressor performance, turbine performance, cooling effectiveness, materials.). The first column shows a conventional air cooled gas turbine combined cycle without a regenerator (A) and the second column shows a (conventional) regenerative gas turbine combined cycle (B) as in FIG. 2. In both cases, the cycle pressure ratios have been selected for increased efficiency (points A and B on FIG. 5) based on conventional bottoming cycle technology. In exemplary embodiments, a lower compression ratio of the regenerative cycle increases the amount of energy that can be captured to the combustion air, which explains why the regenerative cycle achieves peak efficiency at lower pressure ratio than the conventional air cooled combined cycle without regeneration. FIGS. 6-9 illustrate a power cycle comparison table 600 showing that although the regenerative gas turbine portion of the cycle is more efficient, (44.6% vs. 38.4%), the bottoming cycle is less efficient in comparison to the conventional combined cycle, (66.8% vs. 72.6%).

The third column in the table 600 shows the performance for the cycle of the system 300 illustrated in FIG. 3. It is appreciated that in comparison to the system 200 of FIG. 2, the apportionment of gas turbine exhaust flow (and hence exhaust energy) between the regenerator and the bottoming cycle heat recovery (steam superheat and reheat) is such that the steam temperature to the bottoming cycle steam turbine is no longer constrained by compressor exit air temperature. This feature is facilitated by the fact that the gas turbine hot gas path components are cooled by air extracted from the compressor such that the air available for combustion is substantially less than the exhaust leaving the gas turbine and available for regeneration and bottoming cycle use. In the example shown in Table 1, the cooling air amounts to ∼15% of compressor inlet air so the combustion air is <85% of the gas turbine exhaust. Thus, the combustion air can be fully heated while still reserving ∼15% of the high temperature exhaust for bottoming cycle use. As the gas turbine firing temperature is increased the air required for turbine cooling increases and thus the proportion of the exhaust flow required to regeneratively heat combustion air decreases. This exemplary arrangement of the equipment according to Figure 3 increases the efficiency of case (C) by 0.73% points, more than doubling the benefit of the regenerative (gas turbine combined cycle (GTCC)) (B) vs. the base non-regenerative GTCC (A). The fourth column in Table 1 (D) illustrates the additional performance available to the exemplary embodiment cycle with increased steam temperature, which further improves cycle efficiency. Cases C and D are also illustrated on FIGS. 4 and 5, further illustrating the efficiency increases.

In exemplary embodiments, cycle efficiency entitlement is increased by providing a stronger efficiency improvement via increased regenerator surface area. As area is increased irreversibility in the regenerator trends towards zero in the system 300. In contrast, conventional regenerative gas turbine cycles with compressor extraction for turbine expander cooling have significant non-zero, irreversibility in the regenerator even with infinite surface area. In these prior art regenerative cycles an infinitely large regenerator yields exit air temperature equal to turbine exhaust temperature, but regenerator exit exhaust temperature is still significantly hotter than entering air temperature from compressor discharge.

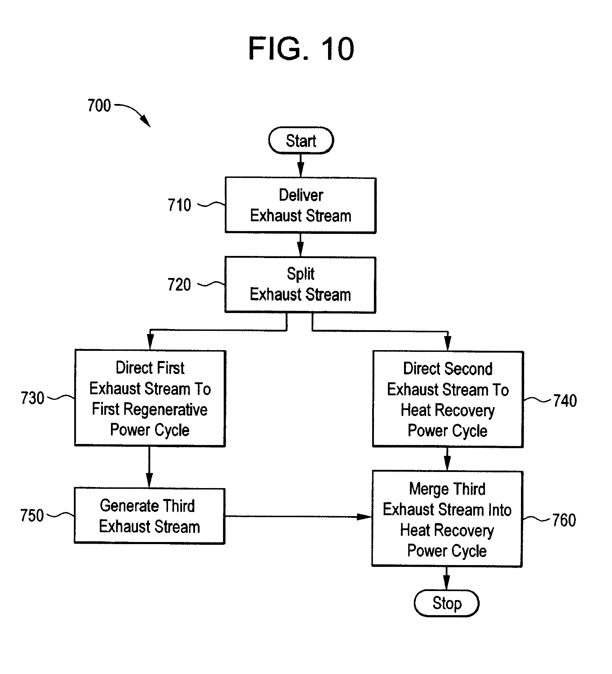

FIG. 10 illustrates a flow chart of a split flow regenerative power cycle method 700 in accordance with exemplary embodiments. At block 710, the gas turbine delivers an exhaust stream. At block 720, the exhaust stream is split to a first exhaust stream 311 and a second exhaust stream 312. In exemplary embodiments, the first exhaust stream 311 to directed to the regenerator 335 for a first regenerative power cycle at block 730 and the second exhaust stream 312 is directed to the a heat recovery steam generator 350 for a heat recovery power cycle at block 740. At block 750, the regenerator 335 generates a third exhaust stream 313. At block 760, the HRSG 350 merges the third exhaust stream 313 into the heat recovery power cycle. As described herein the first exhaust stream 311 supplies heat in the regenerator (recuperator) 335 for the compressed air stream 315 for the combustor 325. As further described herein, the second stream 312 provides heat for the bottoming cycle that generates and superheats steam in the heat recovery steam generator 350. In addition, the third exhaust stream 313 provides further heat for the heat recovery steam generator 350.

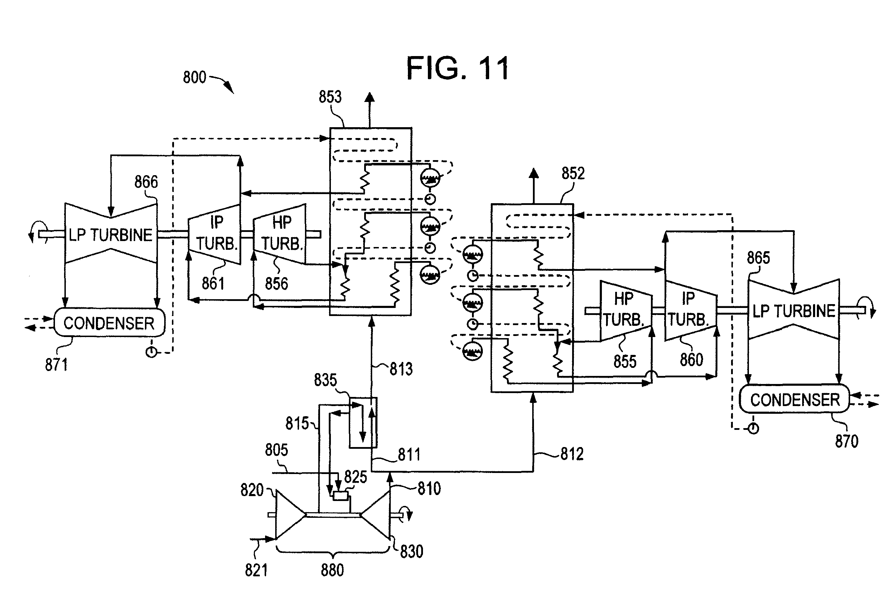

FIG. 11 illustrates a regenerative gas turbine combined cycle system 800 in which exemplary embodiments can be implemented. In exemplary embodiments, partial replacement of fuel stream 805 is achieved by transferring energy recovered from an exhaust stream 810 to combustion air 815 after input air 821 leaves a turbine compressor 820 of a gas turbine 880 and before entering the turbine combustors 825 for the turbine expander 830 of the gas turbine 880. The recovered exhaust energy can be implemented to produce steam in two HRSGs 852, 853. In exemplary embodiments, one HRSG 852 can power a series of steam turbines 855, 860, 865 for example. For illustrative purposes the steam turbines can include a high pressure turbine 855, an intermediate pressure turbine 860, and a low pressure turbine 865. The system 800 can further include a condenser 870 to condense the exhaust steam to water for re-use in the HRSG 852. In exemplary embodiments, the other HRSG 853 can power a series of steam turbines 856, 861, 866 for example. For illustrative purposes the steam turbines can include a high pressure turbine 856, an intermediate pressure turbine 861, and a low pressure turbine 866. The system 800 can further include a condenser 871 to condense the exhaust steam to water for re-use in the HRSG 853.

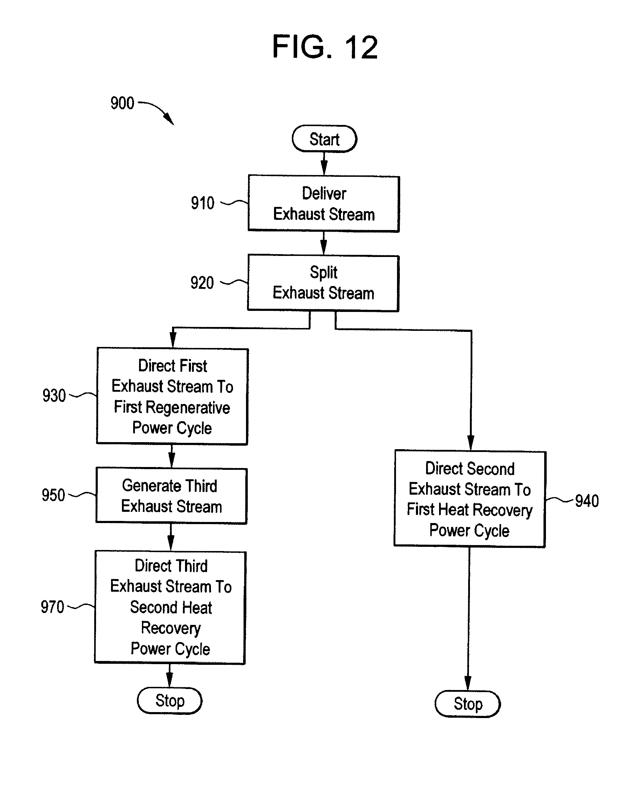

FIG. 12 illustrates a flow chart of a split flow regenerative power cycle method 900 in accordance with the exemplary system 800 of FIG. 11. At block 910, the gas turbine delivers an exhaust stream. At block 920, the exhaust stream 810 is split to a first exhaust stream 811 and a second exhaust stream 812. In this alternate embodiment, the first exhaust stream 811 is directed to the regenerator 835 for a first regenerative power cycle at block 930 and the second exhaust stream 812 is directed to the HRSG 852 for a first heat recovery power cycle at block 940. At block 950, the regenerator 835 generates a third exhaust stream 813 directed to the HRSG 853 for a second heat recovery power cycle at block 970. As described herein the first exhaust stream 811 supplies heat in the regenerator (recuperator) 835 for the combustion air 815 for the combustor 825. As further described herein, the second stream 812 provides heat for the bottoming cycle that generates and superheats steam in the first heat recovery steam generator 852. In addition, the third exhaust stream 813 provides heat for the bottoming cycle that generates and superheats steam in the second heat recovery steam generator 853.

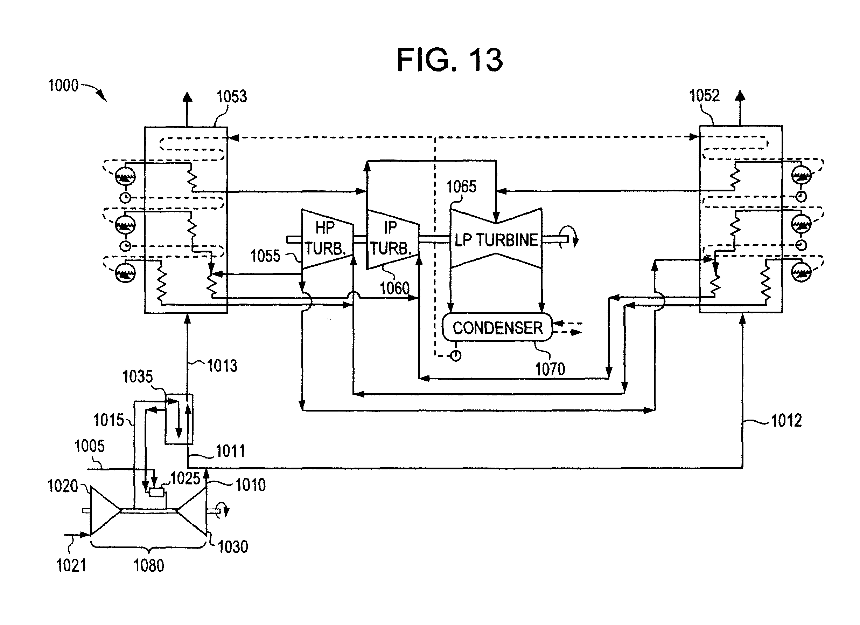

FIG. 13 illustrates a regenerative gas turbine combined cycle system 1000 in which exemplary embodiments can be implemented. In exemplary embodiments, partial replacement of fuel stream 1005 is achieved by transferring energy recovered from an exhaust stream 1010 to combustion air 1015 after input air 1021 leaves a turbine compressor 1020 of a gas turbine 1080 and before entered the turbine combustors 1025 for the turbine expander 1030 of the gas turbine 1080. The recovered exhaust energy can be implemented to produce steam in two HRSGs 1052, 1053. In exemplary embodiments, the HRSGs 1052, 1053 can power a series of steam turbines 1055, 1060, 1065 for example. For illustrative purposes the steam turbines can include a high pressure turbine 1055, an intermediate pressure turbine 1060, and a low pressure turbine 1065. The system 1000 can further include a condenser 1070 to condense the exhaust steam to water for re-use in the HRSGs 1052, 1053.

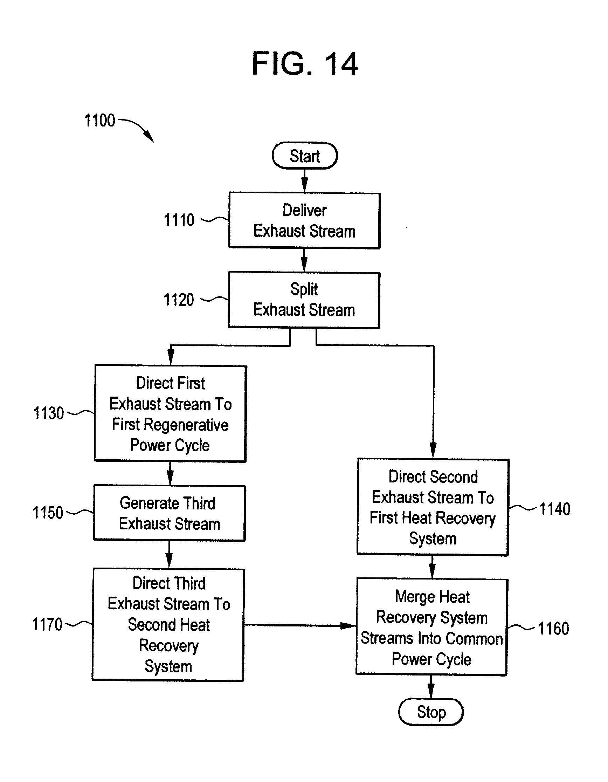

FIG. 14 illustrates a flow chart of a split flow regenerative power cycle method 1100 in accordance with the exemplary system 1000 of FIG. 13. At block 1110, the gas turbine delivers an exhaust stream. At block 1120, the exhaust stream 1010 is split to a first exhaust stream 1011 and a second exhaust stream 1012. In this alternate embodiment, the first exhaust stream 1011 is directed to the regenerator 1035 for a first regenerative power cycle at block 1130 and the second exhaust stream 1012 is directed to the HRSG 1052 at block 1140. At block 1150, the regenerator 1035 generates a third exhaust stream 1013 which is directed to the HRSG 1053 at block 1170. At block 1160, the heat recovery working fluids from blocks 1140 and 1170 are directed into a common power cycle at block 1160. As described herein the first exhaust stream 1011 supplies heat in the regenerator (recuperator) 1035 for the combustion air 1015 for the combustor 1025. As further described herein, the second stream 1012 provides heat for the heat recovery system cycle that generates and superheats steam in the heat recovery system 1052. In addition, the third exhaust stream 1013 provides heat for the heat recovery system cycle that generates and superheats steam in the heat recovery system 1053.

While the exemplary embodiments described herein include exhaust flow from a gas turbine that is proportioned to two heat exchangers (a regenerator to heat combustion air and a separate HRSG to reheat and/or superheat bottoming cycle vapor), it should be readily understood that the heat transfer surfaces could also be housed in a single heat exchanger casing with internal gas flow apportionment (i.e., parallel heat transfer surfaces) and/or alternating regenerator and bottoming cycle heat transfer sections in series.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Aspects of the present invention are defined in the following numbered clauses:
1. In a gas turbine system, a regenerative power cycle method, comprising:
   delivering a gas turbine exhaust stream from a gas turbine;
   splitting the exhaust stream to a first exhaust stream and a second exhaust stream;
   directing the first exhaust stream from the gas turbine to a first regenerative power cycle; and
   directing the second exhaust stream from the gas turbine to a heat recovery power cycle.
2. The method as claimed in clause 1, wherein the first exhaust stream is a regenerator exhaust stream.
3. The method as claimed in clause 1 or clause 2, wherein the second exhaust stream is a heat recovery steam generator exhaust stream.
4. The method of any one of the preceding clauses, further comprising supplying heat from the first exhaust stream to compressed air for the gas turbine system.
5. The method as claimed in clause 4, further comprising generating a third exhaust stream after the heat is regneratively supplied to the compressed air.
6. The method as claimed in any one of the preceding clauses, further comprising supplying heat from the second exhaust stream to a bottoming cycle of the gas turbine exhaust system.
7. The method as claimed in clause 5, wherein the third exhaust stream supplies its heat to a bottoming cycle of the gas turbine exhaust system.
8. A regenerative power cycle system, comprising:
   a gas turbine configured to deliver a split flow exhaust stream having a first exhaust stream and a second exhaust stream;
   a regenerator operatively coupled to the gas turbine and configured to receive the first exhaust stream; and
   a heat recovery steam generator operatively coupled to the gas turbine and configured to receive the second exhaust stream.
9. The system as claimed in clause 8, further comprising an air compressor operatively coupled to the regenerator.
10. The system as claimed in clause 8 to clause 9, further comprising a combustor operatively coupled to the regenerator, and configured to receive combustion air from the regenerator.
11. The system as claimed in any one of clauses 8 to 10, wherein the compressed air stream is heated in the regenerator by the first exhaust stream.
12. The system as claimed in clause 11, wherein the combustor is further configured to receive a fuel stream.
13. The system as claimed in any one of clauses 8 to 12, wherein the regenerator is configured to generate a third exhaust stream.
14. The system as claimed in clause 13, wherein the third exhaust stream provides heat to an additional turbine via heat recovery to a bottoming cycle.
15. The system as claimed in any one of clauses 8 to 14, wherein the second exhaust stream provides additional heat to the additional turbine via heat recovery to a bottoming cycle.
16. The system as claimed in any one of clauses 8 to 15, wherein the additional turbine is a steam turbine.
17. The system as claimed in clauses 8 to 16, wherein the second exhaust stream provides heat to a bottoming cycle of the system.
18. A gas turbine system, comprising:
   a gas turbine having two parallel exhaust streams;
   a regenerator operatively configured to receive a first stream of the parallel exhaust streams;
   a heat recovery steam generator operatively configured to receive a second stream of the parallel exhaust streams; and
   a combustor configured to receive a heated compressed air stream from the regenerator.
19. The system as claimed in clauses 18, further comprising an air compressor operatively coupled to the turbine expander, the regenerator and the combustor.
20. The system as claimed in clause 18 or clause 19, further comprising an additional turbine operatively coupled to the heat recovery steam generator.

## Claims

1. A regenerative power cycle system (100, 200, 300, 800, 1000) comprising:
a gas turbine (180, 280, 380, 880, 1080) configured to deliver a split flow exhaust stream (110, 210, 310, 810, 1010) having a first exhaust stream (311, 811, 1011) and a second exhaust stream (312, 812, 1012);
a regenerator (135, 235, 335, 835 1035) operatively coupled to the gas turbine (180, 280, 380, 880, 1080) and configured to receive the first exhaust stream (311, 811, 1011); and
a heat recovery steam generator (250, 350, 850, 1050) operatively coupled to the gas turbine (180, 280, 380, 880, 1080) and configured to receive the second exhaust stream (312, 812, 1012).

2. The system (100, 200, 300, 800, 1000) as claimed in claim 1, further comprising an air compressor (120, 220, 320, 820, 1020) operatively coupled to the regenerator (135, 235, 335, 835 1035).

3. The system (100, 200, 300, 800, 1000) as claimed in claim 1 or claim 2, further comprising a combustor (125, 225, 325, 825, 1025) operatively coupled to the regenerator (135, 235, 335, 835 1035), and configured to receive a combustion air (115, 215, 315, 815, 1015) from the regenerator (135, 235, 335, 835 1035),.

4. The system (100, 200, 300, 800, 1000) as claimed in any one of the preceding claims, wherein the combustion air (115, 215, 315, 815, 1015) is heated in the regenerator (135, 235, 335, 835 1035) by the first exhaust stream (311, 811, 1011);.

5. The system (100, 200, 300, 800, 1000) as claimed in claim 3 or claim 4, wherein the combustor (125, 225, 325, 825, 1025) is further configured to receive a fuel stream (105, 205, 305, 805, 1005).

6. The system (100, 200, 300, 800, 1000) as claimed in any one of the preceding claims, wherein the regenerator (135, 235, 335, 835 1035) is configured to generate a third exhaust stream (813, 1013).

7. The system (100, 200, 300, 800, 1000) as claimed in claim 6, wherein the third exhaust stream (813, 1013) provides heat to an additional turbine (855, 856, 860, 861, 865, 866, 1055, 1060, 1065) via heat recovery to a bottoming cycle.

8. The system (100, 200, 300, 800, 1000) as claimed in any one of the preceding claims, wherein the second exhaust stream (312, 812, 1012) provides additional heat to the additional turbine (855, 856, 860, 861, 865, 866, 1055, 1060, 1065) via heat recovery to a bottoming cycle.

9. The system (100, 200, 300, 800, 1000) as claimed in claim 6 or claim 7, wherein the additional turbine (855, 856, 860, 861, 865, 866, 1055, 1060, 1065) is a steam turbine.

10. The system (100, 200, 300, 800, 1000) as claimed in any one of the preceding claims, wherein the second exhaust stream (312, 812, 1012) provides heat to a bottoming cycle of the system (100, 200, 300, 800, 1000).

11. In a gas turbine system, a regenerative power cycle method, comprising:
delivering a gas turbine exhaust stream from a gas turbine;
splitting the exhaust stream to a first exhaust stream and a second exhaust stream;
directing the first exhaust stream from the gas turbine to a first regenerative power cycle; and
directing the second exhaust stream from the gas turbine to a heat recovery power cycle.

12. The method as claimed in claim 11, wherein the first exhaust stream is a regenerator exhaust stream.

13. The method as claimed in claim 11 or claim 12, wherein the second exhaust stream is a heat recovery steam generator exhaust stream.

14. The method of any one of claims 11 to 13, further comprising supplying heat from the first exhaust stream to compressed air for the gas turbine system.

15. The method as claimed in claim 14, further comprising generating a third exhaust stream after the heat is regneratively supplied to the compressed air.
